# EUROPEAN PATENT APPLICATION

(11) **EP 2 209 157 A1**
(43) Date of publication of application: **21.07.2010**
(21) Application number: 10150182.3
(22) Date of filing: 06.01.2010
(51) Int. Cl.: H01Q 1/00, H01Q 1/24, H01Q 5/00

(54) **Communication module and method to receive signal using the same**

(30) Priority: 14.01.2009 KR 20090002839
(71) Applicant: Samsung Electronics Co., Ltd., Suwon-si, Gyeonggi-do 442-742 (KR)
(72) Inventor: Lee, Sung Han, Suwon-si, Gyeonggi-do (KR)
(74) Representative: Van Someren, Petronella F. H. M.

(57) **Abstract**

A communication module includes an infrared (IR) receiver to receive an IR signal, and an antenna to receive a radio frequency (RF) signal. The IR receiver and the antenna are configured into a single mountable module.

## Description

### 1. Field of the Invention

Embodiments of the present general inventive concept relate to a communication module in which an antenna to receive a Radio Frequency (RF) signal is mounted to an infrared (IR) receiver to receive a plurality of types of signals, and a method to receive signals using the same.

### 2. Description of the Related Art

Generally, IR communication is a means to transmit and receive data by IR rays or beams. While IR communication may be found in a wide variety of applications, such as electronic devices, including TVs, VCRs, DVDs, PCs, printers, mobile devices, etc., IR communication requires positioning of electronic devices in a line-of-sight and it is limited to a short range of about 5 or less meters. Hence, IR communication suffers from distance limitations, physical obstacles, a limited angle-of-use, and constraints imposed by external noise (e.g. three-wavelength fluorescent light).

Techniques have recently been proposed to overcome the above problems by mounting an RF module to a conventional IR reception module. Radio frequencies allow signals to be transmitted to a receiver even if a transmitter is not within a line-of-sight of the receiver. Additionally, RF transmission may have a greater range than IR communication, and RF signals may be transmitted omnidirectionally.

However, a technique is needed to mount an antenna to the conventional IR reception module more efficiently with low cost and improved mountability.

### SUMMARY

The present general inventive concept includes a communication module in which an antenna that receives an RF signal is mounted to an IR receiver to receive a plurality of types of signals, and a method to receive a signal using the same.

Additional aspects and utilities of the present general inventive concept will be set forth in part in the description which follows and, in part, will be obvious from the description, or may be learned by practice of the general inventive concept.

Features and utilities of the present general inventive concept may be achieved by providing a communication module that includes an infrared (IR) receiver to receive an IR signal, and an antenna to receive a radio frequency (RF) signal. The IR receiver and the antenna are part of a single mountable module.

The antenna may be a planar inverted F antenna (PIFA) to receive RF signals in a plurality of frequency bands.

A length of the planar inverted F antenna may be changed according to a desired wavelength of a received frequency.

The IR receiver may include a power supply lead line, an output lead line, and a ground lead line, and the planar inverted F antenna may be connected to the ground line.

The planar inverted F antenna may be part of a structure to mount the IR receiver.

The length of the planar inverted F antenna may be extended past an end of the IR receiver.

The length of the planar inverted F antenna may be increased by press-processing a second antenna to the planar inverted F antenna.

At least one of a shape, a width, and a length of the second antenna may be changed according to the wavelength of the received frequency.

Embodiments of the present general inventive concept may also be achieved by providing a method to receive a signal in a communication module in which an infrared (IR) receiver and a radio frequency (RF) receiver are mounted. The method may include receiving one of an IR signal and an RF signal, acquiring a data signal by processing the one of the IR signal and the RF signal, and outputting the data signal.

The RF signal may have at least one of a plurality of frequency bands.

The IR data signal may be processed in the communication module, and the RF signal may be processed by an RF signal processor outside the communication module.

Additional features and utilities of the present general inventive concept may be realized by a communication module including: a main body including an infrared (IR) receiver, and a frame to mount the main body, the frame including a radio frequency (RF) antenna.

The communication module may further include a power supply lead, an output lead, and a ground lead, wherein the power supply lead, the output lead, and the ground lead are connected to the main body. The main body may include an optical processor and the IR receiver may be a photodiode.

The RF antenna may be connected to the ground lead.

The main body may include a top surface and a bottom surface opposite the top surface, the bottom surface being defined as a surface to face a mounting surface upon which the communication module is to be mounted, and a plurality of lateral surfaces between the top surface and the bottom surface, the lateral surfaces being substantially perpendicular to the top and bottom surfaces.

The RF antenna may be located along an entire length of a first lateral surface of the plurality of lateral surfaces, and it may extend past an end of the first lateral surface, such that a length of the RF antenna is greater than a length of the first lateral surface.

When a direction perpendicular to the bottom surface defines a mounting direction, the RF antenna may extend past an end of the first lateral surface in a lateral direction perpendicular to the mounting direction. Also, the RF antenna may extend in the mounting direction past a junction of the first lateral surface to the bottom surface.

A mounting portion of the RF antenna may be located adjacent to a corner between two lateral surfaces and may extend past the bottom surface of the main body to mount the communication module to a mounting surface.

The communication module may further include a power supply lead, an output lead, and a ground lead, and the power supply lead, the output lead, and the ground lead may be connected to the main body at a second lateral surface. The mounting portion of the RF antenna may be located on a third lateral surface opposite the second lateral surface.

The RF antenna may include a second antenna portion mounted to the top surface of the main body.

Additional features and utilities of the present general inventive concept may be realized by a method to manufacture a communication module, the method comprising: providing a main body including an infrared (IR) receiver, and forming a frame to mount the IR receiver, the frame including at least one radio frequency (RF) antenna.

The RF antenna may extend past an end of a first lateral surface of the main body, and it may be formed along an entire surface of the first lateral surface.

Forming the frame may include forming a mounting part extending past the bottom surface of the main body, the mounting part being part of the RF antenna.

The method may further include mounting the communication module to a printed circuit board. Mounting the communication module to the printed circuit board may include connecting the mounting part to an RF processor connected to the printed circuit board.

The mounting part of the RF antenna may be mounted directly to the printed circuit board and the main body does not contact the printed circuit board.

The method may further include providing at least a power supply lead, an output lead, and a ground lead on a second lateral surface of the main body.

Forming the frame may include forming a mounting part on a third lateral surface opposite the second lateral surface, the mounting part being part of the RF antenna.

Forming the frame may include connecting the RF antenna to the ground lead.

The method may further include forming a second antenna on the top surface of the main body and connecting the second antenna to the RF antenna.

Additional features and/or utilities of the present general inventive concept may be realized by a device to receive infrared (IR) and radio frequency (RF) signals, the device including: a printed circuit board, a communication module, and an RF signal processor. The communication module may include a main body including an infrared (IR) receiver including an IR-signal-receiving element and an optical processor to process a signal from the IR-signal-receiving element, and a frame to mount the main body to the printed circuit board, the frame including a radio frequency (RF) antenna. The RF signal processor may receive and process signals from the RF antenna.

The device to receive IR and RF frequency signals may further include a receiving window to pass an infrared beam from outside the device to the IR-signal-receiving element inside the device.

### BRIEF DESCRIPTION OF THE DRAWINGS

These and/or other features and utilities of the general inventive concept will become apparent and more readily appreciated from the following description of the embodiments, taken in conjunction with the accompanying drawings of which:
FIG. 1 is a control block diagram of a communication module according to an exemplary embodiment of the present general inventive concept;
FIG. 2A illustrates an exterior structure of the communication module according to an exemplary embodiment of the present general inventive concept;
FIG. 2B illustrates an exterior structure of a communication module as seen from one side;
FIG. 3 illustrates an exterior structure of the communication module according to another exemplary embodiment of the present general inventive concept;
FIG. 4 illustrates an exterior structure of the communication module according to another exemplary embodiment of the present general inventive concept;
FIG. 5 illustrates an exterior structure of the communication module according to another exemplary embodiment of the present general inventive concept;
FIG. 6A illustrates an exterior structure of the communication module according to a further exemplary embodiment of the present general inventive concept;
FIG. 6B illustrates another view of the exterior structure of the communication module in FIG. 6A;
FIG. 7 illustrates mounting of the communication module of FIG. 2A onto a first Printed Circuit Board (PCB);
FIG. 8 illustrates mounting of the communication module of FIG. 2A onto a second PCB;
FIG. 9 is a flowchart illustrating a signal reception method in a communication module according to an exemplary embodiment of the present general inventive concept;
FIG. 10 illustrates a method to manufacture a communication module; and
FIG. 11 illustrates another method to manufacture a communication module.

### DETAILED DESCRIPTION OF THE EMBODIMENTS

Reference will now be made in detail to the embodiments of the present general inventive concept, examples of which are illustrated in the accompanying drawings, wherein like reference numerals refer to the like elements throughout.

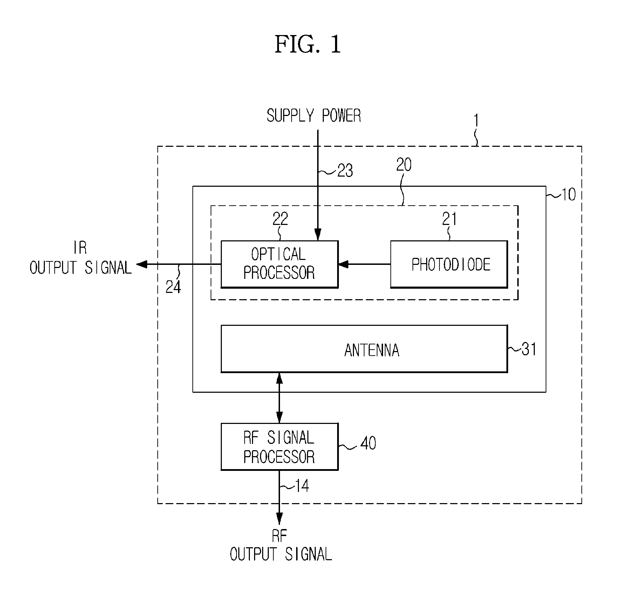

FIG. 1 is a control block diagram of an IR and RF signal reception device 1 including a communication module 10 according to an exemplary embodiment of the present general inventive concept.

Referring to FIG. 1, a communication module 10 according to the exemplary embodiment of the present general inventive concept may include an IR receiver 20 to receive an external IR signal and an antenna 30 to receive an external RF signal.

The IR receiver 20 may have a photodiode 21 to receive the external IR signal and an optical processor 22 to acquire a data signal by processing the received IR signal received from the photodiode 21. The IR receiver 20 may be similar to a conventional IR reception module.

The communication module 10 is connected to an RF signal processor 40 that acquires a data signal by processing the received RF signal received through the antenna 30 and outputs the data signal. The RF signal processor 40 may output an RF output signal 14.

An IR and RF signal reception device 1 may include the communication module 10 and the RF signal processor 40. The device may further include a window to pass an IR beam to the photodiode 21 and an outer structure capable of passing radio frequency waves to the antenna 30.

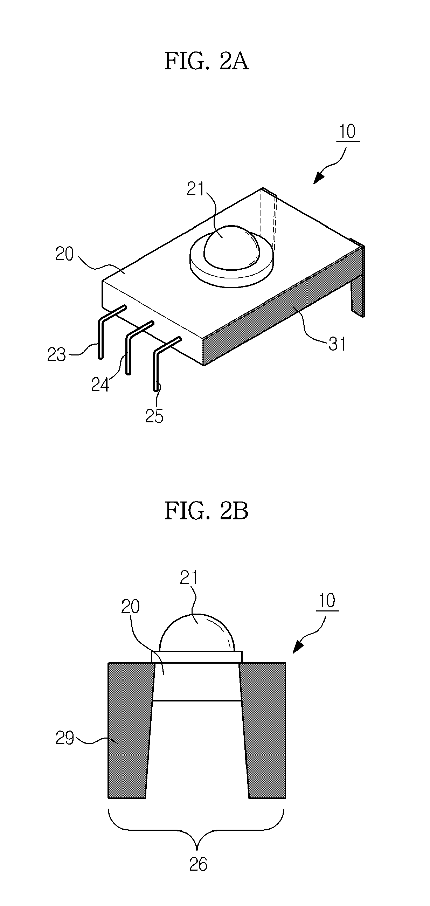

FIG. 2A illustrates an exterior structure of the communication module according to an exemplary embodiment of the present general inventive concept.

Referring to FIG. 2A, in the communication module 10, the IR receiver 20, similar to a conventional IR reception module, is designed with a predetermined form. The mold-shaped IR receiver 20 may include metal leads (or frames, or mounting parts) 26 (as shown in FIG. 2B) at both ends of one side thereof, to mount the IR receiver 20 onto a printed circuit board. The mold-shaped IR receiver 20 may also include a power supply lead line 23 to supply power, an output lead line 24 to output received data, and a ground lead line 25 on a side opposite the mounting metal leads 26. The IR receiver 20 may further include a photodiode 21 or another IR-signal-receiving element to receive an IR beam or wave.

In accordance with this exemplary embodiment, the mount frame of a metal lead may be configured to be a Planar Inverted F Antenna (PIFA) 31 to receive an RF signal, such that the IR receiver 20 and the planar inverted F antenna 31 are configured into a single module and mountable on a PCB in the communication module 10. The resulting module is more efficient to manufacture and assemble and renders the communication module 10 small and lightweight.

The antenna 31 receives RF signals in various frequency bands such as the Industrial, Science and Medical (ISM) bands of 2.4GHz and 5.8GHz and Global System for Mobile Communication (GSM)/Digital Cellular System (DCS)/United States Personal Communication Services (US PCS) bands.

In the communication module 10, the mold-shaped IR receiver 20 is separated from the antenna 31 of the metal lead in order to maintain a stable performance for the transmission and reception frequencies of signals received through them. The IR receiver 20 and the antenna 31 may transmit their outputs independently without any correlation to one another.

FIG. 2B illustrates a view of one side of the communication module 10 shown in FIG. 2A. Mounting parts 26 ensure that the IR receiver 20 is elevated from a mounting surface. Mounting part 29 is also connected to a portion of the RF antenna 31 on another side of the IR receiver to form a portion of the antenna 31. In other words, reference number 26 refers to the mounting parts, generally, and reference number 29 refers to only the mounting part connected to the RF antenna 31.

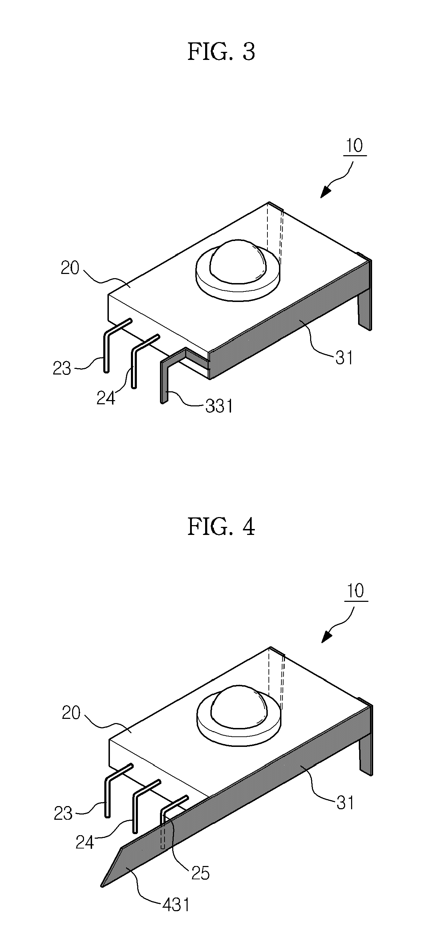

FIG. 3 illustrates an exterior structure of the communication module according to another exemplary embodiment of the present general inventive concept.

Referring to FIG. 3, the communication module 10 illustrated in FIG. 3 is identical to the communication module 10 illustrated in FIG. 2, in that the IR receiver 20 is designed in the form of a mold and the mount frame of a metal lead 29 with which the IR receiver 20 is mounted on a PCB is configured to be a planar inverted F antenna 31 to receive an RF signal.

In the communication module 10 illustrated in FIG. 3, the antenna 31 has an increased length by connecting the ground lead line 25 to the antenna 31 by the ground connector portion 331. Therefore, RF signals in a plurality of bands may be received according to the characteristics (wavelengths) of the RF signals.

FIG. 4 illustrates an exterior structure of the communication module according to another exemplary embodiment.

Referring to FIG. 4, the communication module 10 illustrated in FIG. 4 is identical to the communication modules 10 illustrated in FIGS. 2 and 3, in that the IR receiver 20 is designed in the form of a mold and the mount frame of a metal lead 29 with which the IR receiver 20 is mounted on a PCB is configured to be a planar inverted F antenna 31 to receive an RF signal.

In the communication module 10 illustrated in FIG. 4, the antenna 31 includes an extended portion 431 that extends past an end of the IR receiver 20, so as to receive RF signals in a plurality of bands according to their characteristics (wavelengths).

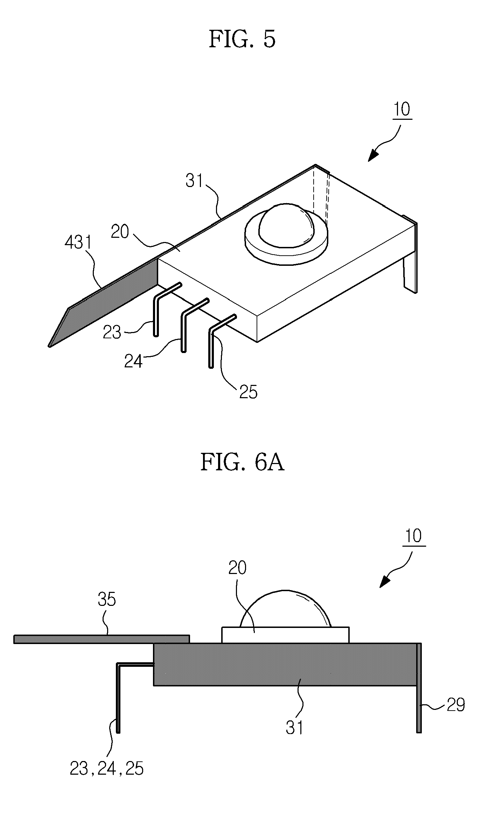

FIG. 5 illustrates an exterior structure of the communication module according to another exemplary embodiment.

Referring to FIG. 5, the communication module 10 illustrated in FIG. 5 is identical to the communication modules 10 illustrated in FIGS. 2, 3 and 4, in that the IR receiver 20 is designed in the form of a mold and the mount frame of a metal lead 29 with which the IR receiver 20 is mounted on a PCB is configured to be a planar inverted F antenna 31.

In the communication module 10 illustrated in FIG. 5, the antenna 31 including an extended portion 431 is located on a side of the communication module 10 opposite the side shown in FIGS. 2A-4.

FIG. 6A illustrates an exterior structure of the communication module according to a further exemplary embodiment of the present invention.

Referring to FIG. 6A, the communication module 10 illustrated in FIG. 6A is identical to the communication modules 10 illustrated in FIGS. 2 to 5, in that the IR receiver 20 is designed in the form of a mold and the mount frame of a metal lead 29 with which the IR receiver 20 is mounted on a PCB is configured to be the planar inverted F antenna 31 to receive an RF signal.

In the communication module 10 illustrated in FIG. 6A, a second antenna 35 is press-processed on one end of the mount frame of the metal lead 29 forming the planar inverted F antenna 31. Therefore, RF signals may be received in a plurality of bands according to their characteristics (wavelengths).

The second antenna 35 may be changed in shape, width, and length according to the desired characteristics of a received RF signal.

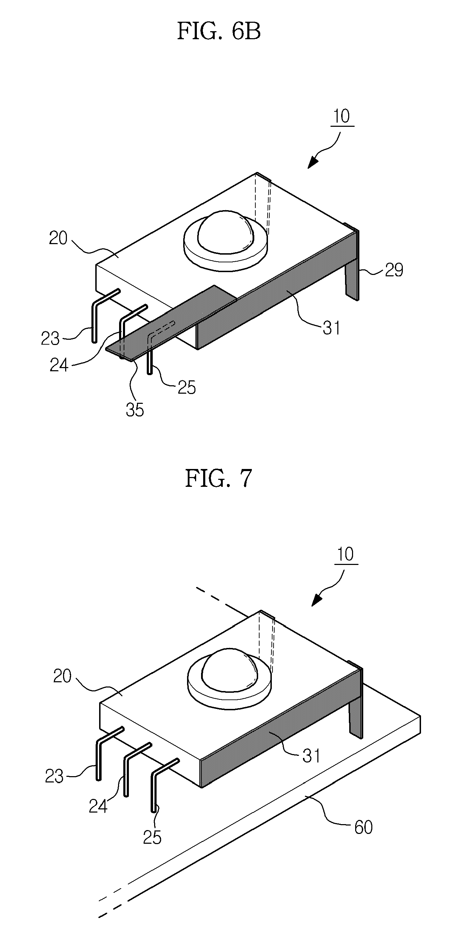

FIG. 6B shows the communication module 10 of FIG. 6A from another perspective. In FIG. 6B, the second antenna 35 connected to the planar inverted F antenna 31 is located on a top portion of the IR receiver 20. While FIG. 6B shows the second antenna 35 extending past an end of the IR receiver 20, the second antenna 35 may have any appropriate configuration. For example, the second antenna 35 may be located along a top surface of the IR receiver 20 so that it does not extend lengthwise past an outer edge of the IR receiver 20, or so that only a portion of the second antenna 35 extends past an outer edge of the IR receiver 20.

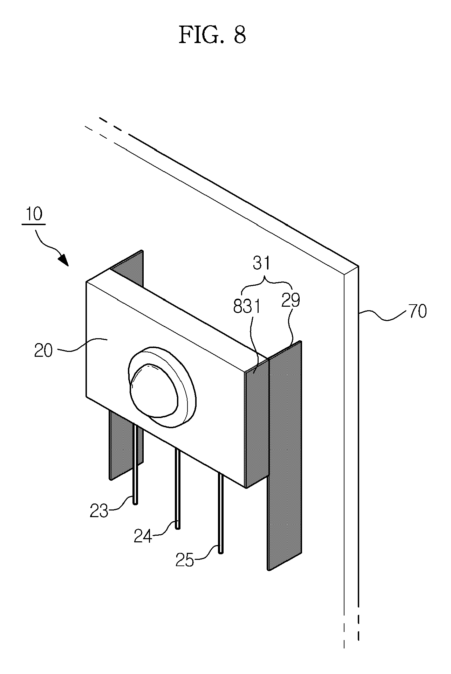

FIG. 7 illustrates mounting of the communication module 10 illustrated in FIG. 2 onto a first PCB and FIG. 8 illustrates mounting of the communication module 10 illustrated in FIG. 2 onto a second PCB.

Referring to FIGS. 7 and 8, the communication module 10 is configured horizontally or vertically and fixed onto the first or second PCB 60 or 70 according to the direction of the first or second PCB 60 or 70.

FIG. 8 further illustrates a configuration of the antenna 31 in which the mounting part 29 is located on a same side of the IR receiver 20 as the main body 831 of the antenna 31. The mounting part 29 may be longer or shorter than the main body 831, depending on a desired frequency range of the antenna 31.

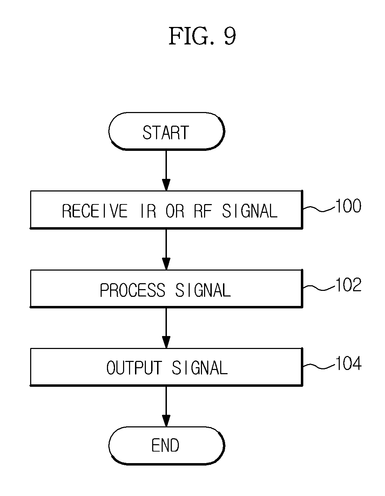

FIG. 9 is a flowchart illustrating a signal reception method in a communication module according to an exemplary embodiment of the present general inventive concept.

Referring to FIG. 9, when the communication module 10 having the IR receiver and the RF receiver mounted thereon receives an IR signal or RF signals in various bands, the photodiode 21 receives the IR signal and the antenna 31 receives an RF signal in operation 100.

In operation 102, the optical processor 22 acquires a data signal by processing the IR signal received from the photodiode 21, and the RF signal processor 40 acquires a data signal by processing the RF signal received through the antenna 31.

The optical processor 22 and the RF signal processor 40 output the data signals in operation 104. There may be no correlation between the data signals. The optical processor 22 and the RF signal processor 40 may be configured separately or integrated, for selective implementation.

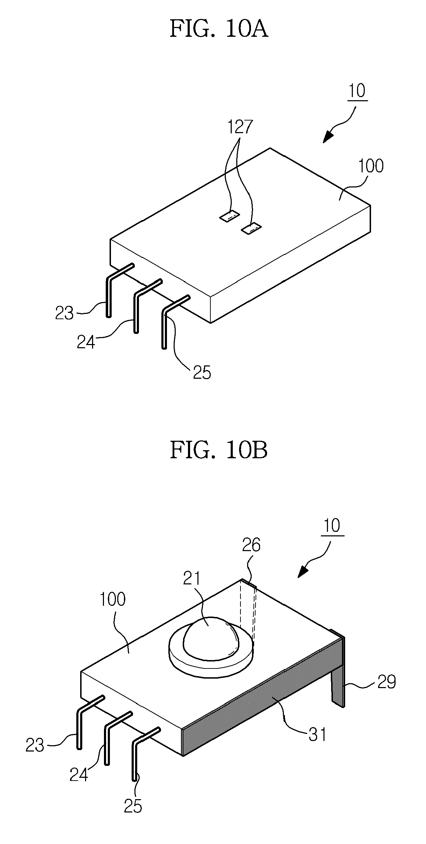

FIGS. 10A-10C illustrate a method of manufacturing a communication module 10. In operation 10A, a main body 100 of the communication module 10 is provided. The main body 100 may include circuitry to receive an IR signal and an RF signal. For example, the main body 100 may include an optical processor 22 and an RF signal processor 40. Alternatively, the main body 100 may include only an optical processor 22 and not an RF signal processor.

The main body 100 may also include a photodiode 21 or other element to receive an IR signal. Alternatively, the photodiode 21 or other IR-signal-receiving element may be mounted to the main body 100. In FIGS. 10A-10C, the main body 100 includes connection leads 127 to receive a photodiode 21 or other IR-signal-receiving element. The main body may also include a power lead 23, an output lead 24, and a ground lead 25.

In operation 10B, a frame including mounting parts 26 and an antenna part 31 is connected to the main body 100. The antenna 31 may include one or more of the mounting parts 29. The photodiode 21 or other IR-signal-receiving element may be mounted to the connection leads 127 of the main body 100.

In operation 10C, the main body 100 is mounted to a printed circuit board 60 via the mounting parts 26, and the leads 23, 24, and 25. The printed circuit board may include leads 134 to connect to the respective leads 23-25 of the main body. The printed circuit board may also include a lead 135 to receive a signal from the planar inverted F antenna 31. For example, the printed circuit board may have an RF signal processor 40 mounted thereon, or it may be connected to an RF signal processor 40, and the lead 135 may be send the signal received from the planar inverted F antenna to the RF signal processor 40.

The mounting parts 26 and the leads 23-25 may prevent the main body 100 from contacting the printed circuit board 60 by elevating the main body above the main circuit board 60. Alternatively, the leads 23-25 and the mounting parts 26 may be configured to allow the main body 100 to contact the printed circuit board 60. For example, the leads 23-25 and the mounting parts 26 may extend laterally outward from the main body 100.

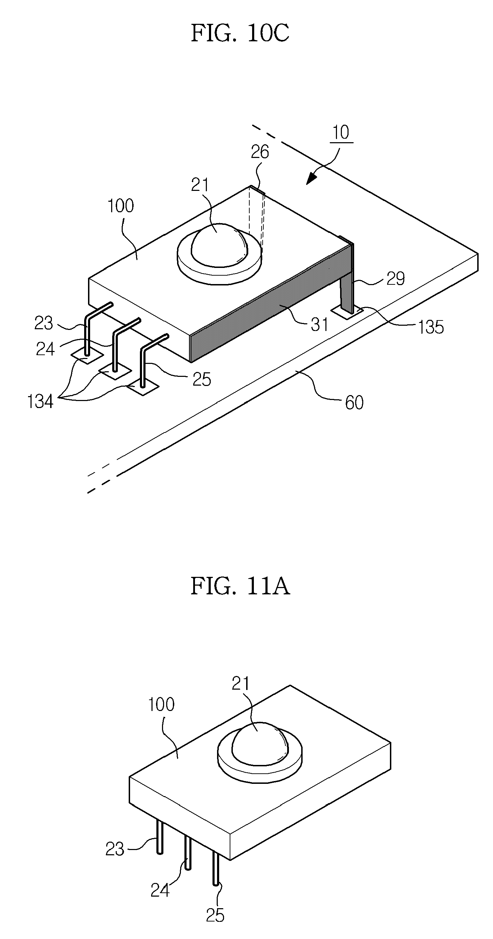

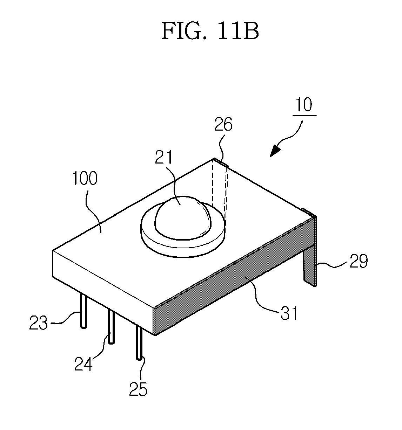

FIGS. 11A and 11B are similar to FIGS. 10A-10C, except the photodiode 21 or other IR-signal-receiving element is part of the main body 100 rather than being mounted on the main body 100. For example, the main body 100 may be an IR receiver 20 having a photodiode 21 therein. In addition, in operation 11A a main body 100 is provided that has leads 23-25 that protrude from a bottom surface of the main body 100, rather than from a lateral surface. However, the leads 23-25 may protrude from any surface of the main body 100 depending on a desired configuration.

In operation 10B the frame is added to the main body, including the RF antenna 31 and mounting parts 26. As with FIG. 10C, numeral 26 denotes a mounting part, generally, and numeral 29 denotes a mounting part that is part of the RF antenna 31. Although not shown in FIGS. 11A and 11B, the main body 100 may be mounted to a printed circuit board via the leads 23-25 and the mounting parts 26, 29.

The communication modules 10 according to the exemplary embodiments of the present general inventive concept enable modules to be designed on an individual basis in the current transitional market that is gradually shifting from conventional production schemes using only the IR receiver 20 to RF schemes. The exemplary embodiments provide these features and utilities by mounting an IR receiver and an RF receiver on the same device. For example, when data is received from a remote controller in an RF signal or an IR signal, a communication module may have a single reception window. This configuration avoids the space requirements and the unseemly appearance of two separate reception windows. A frontal manipulation/display panel may be formed of a metal material or a metal-plated semi-transparent plastic material. Accordingly, the communication modules 10 contribute to enhancing design.

Also, the communication modules 10 according to the exemplary embodiments of the present general inventive concept enable mass production. The use of two types of wireless input devices for a single product contributes to low cost, resulting in an efficient assembly in manufacture, maintenance, and repair. From the perspective of product price, the cost of a planar inverted F antenna includes the cost of a metal material and the manufacture cost of a metal plate, aside from technological cost. Because the cost of a metal material and the manufacture cost of a metal plate are taken in fabrication of a frame mold for the IR receiver, a low-price interface product may be developed only with the technological cost.

Further, the communication modules 10 according to the exemplary embodiments of the present general inventive concept use a fixing mount frame (metal lead) attached to the conventional IR receiver.

While the communication module 10 having the IR receiver and the RF receiver of an ISM band have been described in the exemplary embodiments of the present general inventive concept, by way of example, to which the exemplary embodiments of the present general inventive concept are not limited, it is clear that a receiver capable of wireless communications such as Bluetooth, PHS Internet Access Forum Standard (PIAFS), Shared Wireless Access Protocol (SWAP), Wireless Local Area Network (WLAN) based on Institute of Electrical and Electronics Engineers (IEEE) 802.11b may be mounted with the IR receiver in the communication module 10.

Although a few embodiments of the present general inventive concept have been shown and described, it would be appreciated by those skilled in the art that changes may be made in these embodiments without departing from the principles and spirit of the general inventive concept, the scope of which is defined in the claims and their equivalents.

## Claims

1. A communication module comprising:
an Infrared (IR) receiver to receive an IR signal; and
an antenna to receive a radio frequency (RF) signal, wherein the IR receiver and the antenna are part of a single mountable module.

2. The communication module according to claim 1, wherein the antenna is a planar inverted F antenna (PIFA) to receive RF signals in a plurality of frequency bands.

3. The communication module according to claim 2, wherein a length of the planar inverted F antenna is changed according to a wavelength of a received frequency.

4. The communication module according to claim 3, wherein the IR receiver includes a power supply lead line, an output lead line, and a ground lead line, and the planar inverted F antenna is connected the ground line.

5. The communication module according to claim 3, wherein the planar inverted F antenna is part of a structure to mount the IR receiver.

6. The communication module according to claim 5, wherein a length of the planar inverted F antenna is longer than a length of the IR receiver.

7. The communication module according to claim 5, further comprising a second antenna press-processed to the planar inverted F antenna to extend a length of the planar inverted F antenna.

8. The communication module according to claim 7, wherein a shape, a width, or a length of the second antenna is changed according to a wavelength of the received frequency.

9. A method to receive a signal in a communication module having an Infrared (IR) receiver and a radio frequency (RF) receiver are mounted thereto, the method comprising:
receiving one of an IR signal and an RF signal;
acquiring a data signal by processing the one of the IR signal and the RF signal; and
outputting the data signal.

10. The method according to claim 9, wherein the RF signal has one of a plurality of frequency bands.

11. The method according to claim 9, wherein the IR data signal is processed in the communication module.

12. The method according to claim 11, wherein the RF signal is processed by an RF signal processor outside the communication module.

13. A device to receive infrared (IR) and radio frequency (RF) signals, the device comprising:
a printed circuit board;
a communication module mounted on the printed circuit board, the communication module comprising:
a main body including an infrared (IR) receiver including an IR-signal-receiving element and an optical processor to process a signal from the IR-signal-receiving element; and
a frame to mount the main body to the printed circuit board, the frame including a radio frequency (RF) antenna; and
an RF signal processor to receive and process signals from the RF antenna.

14. The device according to claim 13, further comprising a receiving window to pass an infrared beam from outside the device to the IR-signal-receiving element inside the device.
